# EUROPEAN PATENT APPLICATION

(11) **EP 1 021 031 A2**
(43) Date of publication of application: **19.07.2000**
(21) Application number: 00100716.0
(22) Date of filing: 14.01.2000
(51) Int. Cl.: H04N 1/195

(54) **Device for detecting images**

(30) Priority: 18.01.1999 IT MI990076
(71) Applicant: DF Informatica S.r.l., 20161 Milano (IT)
(72) Inventor: De Fazio, Raffaele, 20063 Desio (MI) (IT); De Fazio, Antonio, 20090 Segrate (MI) (IT); Slocovich, Pietro, 16035 Rapallo (GE) (IT)
(74) Representative: Marietti, Giuseppe

(57) **Abstract**

The device for the detection of images present on a support, according to the present invention, comprises a case endowed with a flat transparent surface for the rest of the support. Within the case are housed means for the acquisition of images and at least one light source. During the simultaneous survey of all the images present on the support, the means of illumination and the light source are fixed with respect to the same support.

## Description

The present invention relates to a device for the detection of images present on a support, suitable in particular for acquiring images, text and/or figures on paper documents for the purpose of carrying out various operations, such as for instance, filing or fax transmission or copying onto different paper support.

A technique commonly employed for the detection of images on printed sheets consists of scanning successive portions of the sheet by means of an image detection device endowed with means for the acquisition of images and with at least one light source. Such means for the acquisition of images usually comprise a focusing element, or a suitable objective lens, and means for capturing the image, such as for instance, a linear sensor endowed with cells of the Charge Coupled Device (CCD) type.

The scanning of such successive portions of the sheet is effected by imposing a relative motion between the means for the acquisition of images and the same sheet.

In some known embodiments of such image detection devices, the sheet is disposed in full on a transparent rest that constitutes the upper surface of a fixed case. Within this fixed case are housed one or more sources of illumination and the aforesaid means for the acquisition of images. The latter, and usually the light source, are fixed to a carriage connected to a motor and a traction device that allows them to move under the transparent rest surface.

During the detection of the image, the carriage, and with it the means for the acquisition of images, move from top to bottom of the sheet effecting the scanning of the latter, or allowing the capture of the images present on successive bands of the sheet. At the end of, or preferably during, this scanning operation, the acquired images relating to the different bands of the sheet are assembled to restore the integrity of the representation of the same sheet.

According to other embodiments, for instance, used in fax transmission apparatus, the scanning is effected by maintaining the means for the acquisition of images fixed and moving the sheet carrying the images are to be detected relative to them. In similar apparatus, the sheet is made to move over a transparent window on the fixed case by means of automatic tractor devices, the means for the acquisition of images and the light source being housed under this window, within and fixed to the fixed case.

Such image detection devices, furthermore, are sometimes connected to an apparatus for the memorization and management of information to create document archives. In particular, such information memorization and management apparatus could comprise electronic devices to process information in digital format, such as for instance, computers.

A serious drawback of the above mentioned devices, however, is their lack of reliability, because of the devices designed to carry out the relative motion between sheet, or other support, and means for the acquisition of images. In fact, the need to acquire images from a large quantity of documents (most of all in detection devices connected to document filing apparatus), and therefore to scan a large number of sheets, involves wear on such devices for the movement of the sheet or of the means of acquisition, leading to a progressive loss of precision and, finally, their breakdown. This results in a short working life for such devices and frequent maintenance.

Another drawback of many of the aforementioned type of detection devices consists in the dazzling of the operator when there is no screen above the sheet and the transparent rest surface to protect the eyes of the operator during the image scanning activity. The light source, in fact, must be oriented in a such way as to achieve intense illumination of the portion of the sheet to be acquired. For this reason, the light source, often constituted by a tubular neon light, is made to move along the surface of the sheet synchronized with the movement of the means for the acquisition of images and the light is directed perpendicularly to the surface of the sheet.

A further drawback of such image detection devices is the encumbrance, sometimes considerable, of the case within which they, together with the means for the acquisition of images and the light source, the devices for the movement of the sheet and/or of the means of acquisition, are housed.

One objective of the present invention is to furnish a device for detection the images present on opaque or gloss supports that resolve the aforementioned drawbacks.

Another objective of the present invention is to create an image detection device that is reliable and that requires little maintenance.

A further objective of the present invention is to furnish an image detection device of reduced encumbrance.

Yet another objective of the present invention is to create an image detection device for which the operator isn't forced to use a screen set above the sheet to be scanned to avoid being dazzled.

These and other objectives are achieved by the device for detection the images present on opaque or gloss supports according to the first independent claim and the following dependent claims.

The device for the detection of images present on a support, according to the present invention, comprises a case endowed with a flat transparent surface to rest the image support. Within the case are housed the means for the acquisition of images and at least one light source. During the simultaneous detection of the entire image present on the support, the means of illumination and the light source are fixed with respect to the same support.

According to a particular aspect of the present invention, the means for the acquisition of images comprise means for the reflection of the images present on the support and means for the capture of such images. Between the means for the reflection and the means for the capture of the images there is interposed at least one image focusing element.

In a particular embodiment of the present invention, the means for the reflection of the images comprise at least one flat mirror.

In another embodiment of the invention, the light source comprises a directional illuminator that generates light rays oblique to the plane of the support surface.

According to another aspect of the present invention, the means for the reflection of the images defines an optical path for the image from the support to the focusing element of not less than 1 meter in length.

In a further embodiment of the present invention, the means for the capture of the image comprise at least one sensor formed by a matrix of cells of the CCD type and the focusing element comprises an optical lens.

A preferred embodiment of the image detection device according to the present invention will now be described by way of example and not of limitation, with reference to the attached figures in which:
figure 1 is a schematic front view in section of a particular device according to the present invention;
figure 2 is a schematic side view in section of the device according to the invention represented in figure 1;
figure 3 is an axonometric view of an illuminator which could be used in a device according to the invention;
figure 4 is a scheme showing a preferential layout of an illuminator which could be used in a device according to the present invention;
figure 5 is a schematic front view in section of another embodiment of a device according to the present invention, in which the external case is realized, at least partially, in detachable modules to facilitate cleaning of the inside components; and
figure 6 is a front scheme of the device of figure 1.

With reference to the figures, the device according to the present invention comprises a case 1 to contain means for the acquisition of images and endowed with a flat transparent surface 2 for the rest of the image support, for instance, a paper sheet, of whose image, figures and/or text it is desired to acquire. The flat transparent surface 2, in particular, has substantially the same dimensions as the support to be acquired and could be equipped with guides, (not shown) to facilitate the positioning of the same document.

The means for the acquisition of images, housed within the case 1, comprise means for the reflection of the images, at least one focusing element 8 and means of capturing the images 9.

The means for the reflection of the images comprise in their turn an arrangement of flat mirrors 4, 5, 6, 7 placed in mutual correspondence in such a way as to define, for the images present on the support, an optical path a, b, c, d, f from the transparent surface 2 to the means of focusing 8. The mirrors 4, 5, 6, 7 have such dimensions as to reflect the whole surface of the support in contact with the plane of support 2 and are so tilted within the case 1 to minimize the distorsion in the reflection of the images to be acquired.

The number and the layout of the mirrors are selected on the basis of the focusing element 8 employed and of the dimensions of the support to be acquired and of the case 1.

The focusing element 8, furthermore, is preferably an optical lens of the type commonly employed in the photographic field. By choosing the length of the path a, b, c, d, f, (shown in figure 6) and in particular setting this length to more than a meter, a photographic lens with a focal length of 35mm can be used as focusing element 8 without significant distortion in the images to be acquired. Such 35mm lenses are particularly inexpensive and easy to obtain.

The transparent rest 2, and therefore, the support to be acquired, is illuminated by a light source 3 (illuminator), housed within the case 1, which projects light rays which fall on the surface 2 obliquely with respect to the plane of the same surface 2.

The light source 3 could also generate light of wavelength comprised within an interval that stretches above and/or below the wavelengths of visible light. In particular, such light could have wavelengths comprised within the interval of the infrared wavelength (from 0.75 µ m to 1 mm).

The means of capturing the images, furthermore, preferably comprise a matrix sensor of the CCD type able to furnish a numerical representation of the captured images as output signal.

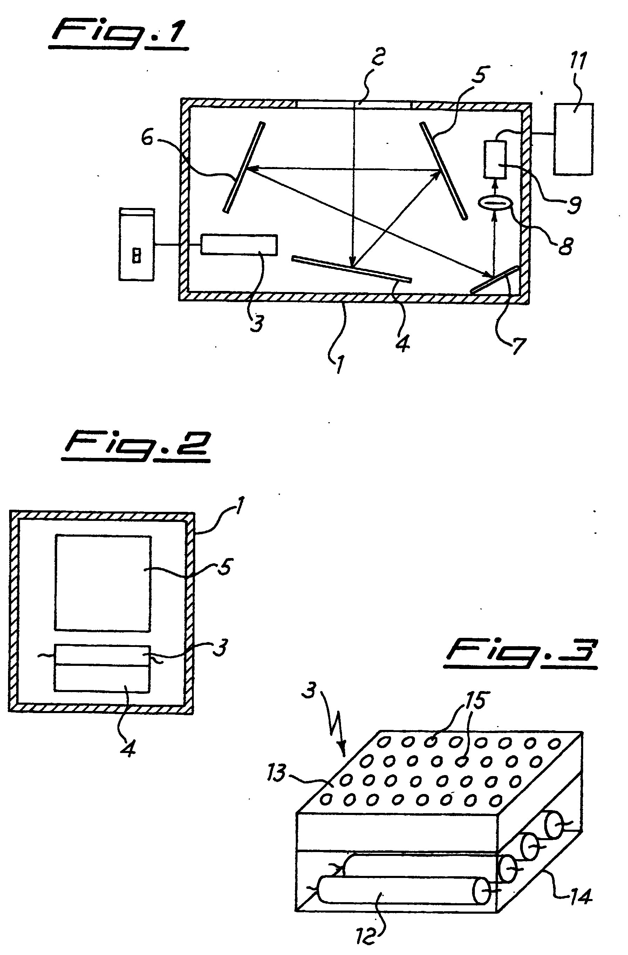

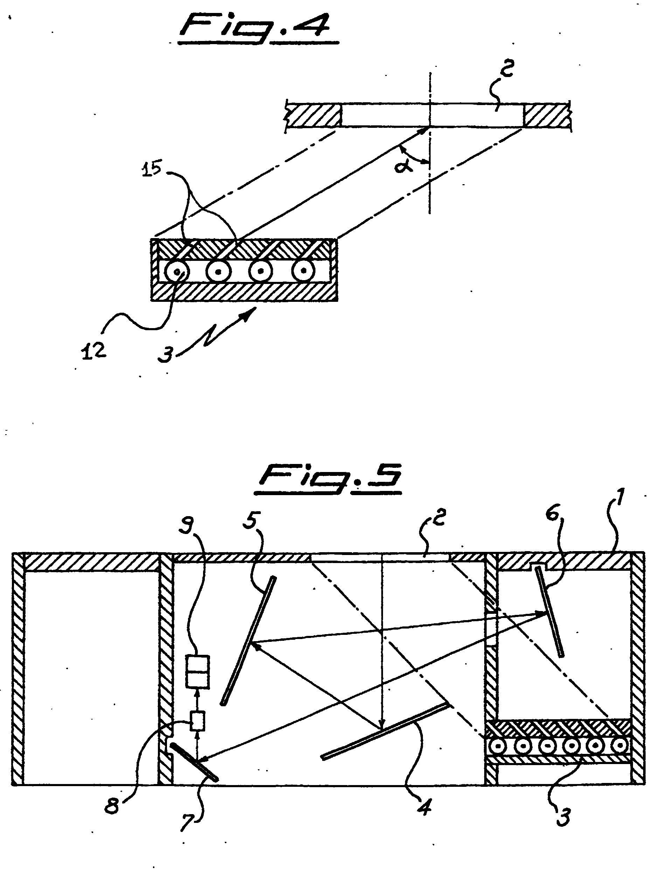

The particular embodiment illustrated in the figures 1 and 2 also presents means 11 of memorization and management of the images, for instance, comprising one or more optical memorization supports connected to a computer working with a suitable memorized data management program.

During operation, the support whose images are to be acquired is placed on the transparent plane 2 in a such way that the whole surface to be acquired is in contact with the same plane surface 2 and is faced toward the interior of the case 1.

The support is then illuminated by the light source 3 and the whole surface to be acquired is reflected by the flat mirrors 4, 5, 6, 7, to the objective 8, along a path which is advantageously greater in length than a meter.

The lens 8, in turn, focuses the reflected images of the whole surface of the support to be acquired on the means of image capture 9 comprising , for instance, a matrix sensor of the CCD type.

Finally, the captured images could be filtered, for instance, by means of a specific driver resident on a card set downstream of the means for the capture of images 9, and filed through data processing apparatus.

The acquisition of the images present on the surface of a support, for instance, a sheet of paper in A4 format, is therefore realized without recourse to movement of any mechanical part, reducing the need for frequent maintenance and eliminating the possibility of breakdowns of the device caused by the wear on mobile mechanical parts.

Figure 3 is a schematic representation of an illuminator 3 which generates light beams tilted with respect to the plane of rest 2 and, consequently, to the support to be acquired. The illuminator 3 comprises a perforated upper grate 13 fixed to a lower base 14 within which are housed lamps 12 that generate the light intensity necessary for the acquisition of the images. Such lamps 12 could be the common and inexpensive neon tubular lights.

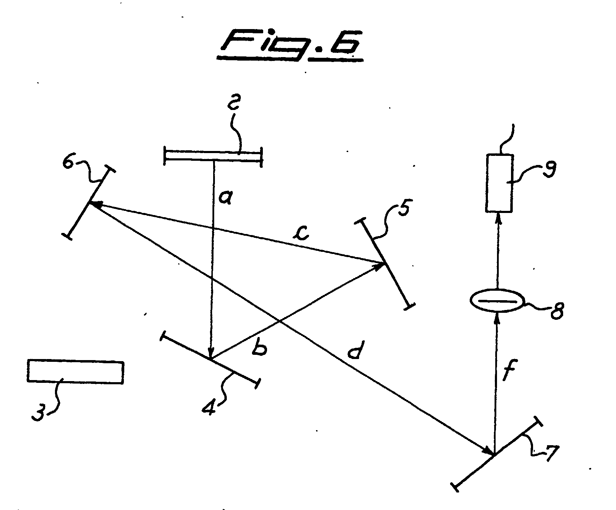

The grate 13 is equipped with holes 15 to project light bands in the direction of the rest plane 2 of the case 1. The holes 15, as indicated in figure 4, present axes tilted at an angle α with respect to the vertical to the plane 2 to illuminate the support in an oblique way. This angle α is between 35° and 55° inclusive and, preferably, equal to 42°.

The inclination of the light rays directed toward the transparent plane 2 allows the operator to perform the activity of acquiring the images without needing to arrange a screen element above the support to be copied on the rest plane 2 to avoid being dazzled.

The device described above can also be fitted, in particular when it is used for filing paper documents, with an automatic sheet feeding device for rest surface 2, for the purpose of making the operation of acquiring the images present on each sheet more expeditious.

Furthermore, the output signal generated by the matrix sensor of the CCD type, where such means are employed for the capture of images, could, where appropriate, be displayed on a service monitor, for instance, an LCD screen , before the memorization of all the images present on the support, to allow the operator to control the layout of the same support with respect to the transparent rest plane.

The device according to the present invention, having no moving parts for the scanning of the images present on a support, is very reliable and precise. Furthermore, due to the low maintenance required, the device has lower running costs.

The employment of low cost components in the device according to the invention, such as commonly commercially available 35mm photographic lenses or CCD sensor cells, allow low cost apparatus for the filing of documents to be made.

Finally, the particular shape and arrangement of the light source with respect to the rest plane of the support to be copied allows the operator effective and easy use of the device, in that the same operator of is not dazzled and accordingly doesn't need to employ any screen element during image acquisition activity.

## Claims

1. Device for the detection of images present on a support, of the type comprising a case with at least one flat transparent surface for the rest of said support, at least one light source, as well as means for the acquisition of images contained within said case, characterized in that said means for the acquisition of images and said source of illumination are fixed with respect to said support during the simultaneous acquisition of all the images present on said support.

2. Device according to Claim 1, characterized in that said means for the acquisition of images comprise means for the reflection of the images from said rest surface and means for the capture of the images, as well as at least one focusing element interposed between said means for reflection and said means for the capture of the images.

3. Device according to Claim 2, characterized in that said means for the reflection of the images comprise one or more flat mirrors.

4. Device according to Claim 2 or 3, characterized in that said means for the reflection define an optical path of the image from said flat support surface to said focusing element being greater or equal to 1 meter in length.

5. Device according to any of the preceding claims, characterized in that said source of light comprises a directional illuminator.

6. Device according to Claim 5, characterized in that said directional illuminator generates one or more light beams arranged to fall obliquely with respect to said flat rest surface of said support.

7. Device according to Claim 6, characterized in that said beams of light fall along straight lines of action that form an angle between 35° and 55° with the perpendicular to said flat rest surface.

8. Device according to Claim 7, characterized in that said beams of light fall along straight lines of action that form an angle of 42° with the perpendicular to said flat support surface.

9. Device according to any of Claims 2 to 8, characterized in that said focusing element comprises an optical lens with a focal length between 10mm and 100mm inclusive.

10. Device according to Claim 9, characterized in that said focusing element comprises an optical lens with focal length equal to 35mm.

11. Device according to any of the claims from 2 to 10, characterized in that said means for the capture of the images comprise a CCD sensor.

12. Device according to any of the preceding Claims, characterized in that said means for the acquisition of the images are connected to means of memorization of the same images.

13. Device according to Claim 11 and 12, characterized in that there are programmable means of electronic processing of the signal furnished by said CCD sensor interposed between said CCD sensor and said means of memorization.

14. Device according to Claim 13, characterized in that said means of memorization comprise an optical or magnetic-optical support.

15. Device according to any of the preceding claims, characterized in that said source of light emits one or more light beams having wavelengths within an interval comprising wavelengths longer and shorter with respect to the wavelength of visible light.

16. Device according to Claim 15, characterized in that said one or more light beams have wavelengths that extend into the infrared field of wavelengths.

17. Method for the detection of images present on a support, by means of a device of the type comprising a case with at least one flat transparent surface for the rest of said support, at least one light source, as well as means for the acquisition of images contained within said case, characterized by comprising the following phases:
- arranging said support in contact with said transparent rest surface;
- acquiring simultaneously by means of said means of acquisition all the images present on said support while maintaining said means of acquisition stationary with respect to said support.

18. Method according to Claim 17, characterized by the phase of simultaneous acquisition of all the images present on said support comprising in turn the phases of:
- reflecting all the images present on said support along an optical path;
- focusing said reflected images at the end of said optical path on means for the capture of images.

19. Method according to Claim 17 or 18, characterized by comprising a further phase of memorization of the images acquired after said phase of simultaneous detection of all the images present on said support.

20. Method according to any of the Claims from 17 to 19, characterized by illuminating said surface of support with beams of light with a straight line of action that forms an angle of between 35° and 55° with the perpendicular to said rest surface.

21. Method according to Claim 20, characterized by illuminating said support surface of with beams of light with a straight line of action that forms an angle of 42° with the perpendicular to said surface of rest.

22. Use of a device according to any of the Claims from 1 to 15 in an apparatus for the scanning of images, or scanner, connected to an electronic computer. 23. Use of a device according to any of the Claims from 1 to 15 as an element for the scanning of documents in a fax transmission apparatus.
